# EUROPÄISCHE PATENTSCHRIFT

(11) **EP 1 768 233 B1**
(45) Veröffentlichungstag und Bekanntmachung des Hinweises auf die Patenterteilung: **14.07.2010**
(21) Anmeldenummer: 05020867.7
(22) Anmeldetag: 24.09.2005
(51) Int. Cl.: H02K 5/128, F04B 17/03, F04D 13/06

(54) **Spaltrohr**
Airgap sleeve
Tube d'entrefer

(43) Veröffentlichungstag der Anmeldung: 28.03.2007
(73) Patentinhaber: Grundfos Management A/S, 8850 Bjerringbro (DK)
(72) Erfinder: Hansen, Jørn Toftegaard, 8600 Silkeborg (DK); Laursen, Cecilie Høj, 8370 Hadstein (DK); Bloch, Carsten, 8544 Mørke (DK); Boll, Jens Vestergaard, 8850 Bjerringbro (DK)
(74) Vertreter: Hemmer, Arnd

(56) Entgegenhaltungen:
- EP-A- 0 268 085
- EP-A- 0 658 967
- DE-A1- 19 744 289
- DE-U1- 8 905 650
- US-A- 3 824 035
- US-A- 4 867 638
- US-A- 5 336 064
- US-A- 6 059 533
- US-A1- 2002 158 545
- US-A1- 2002 192 088
- US-B1- 6 293 772

## Beschreibung

Die Erfindung betrifft ein Pumpenaggregat mit einem nasslaufenden Elektromotor.

Es sind verschiedene Arten von Pumpenaggregaten, beispielsweise Heizungsumwölzpumpen und Tauchpumpen, bekannt, welche als Nassläufer ausgebildet sind, d. h. bei denen der Rotor im Fluid läuft. Bei diesen nasslaufenden Elektromotoren ist im Inneren des Stators ein Spaltrohr vorgesehen, welches den Rotorraum, in welchem der Rotor rotiert und welcher Fluid gefüllt ist, zum Stator hin abdichtet. Die Spaltrohre werden häufig aus Metall, insbesondere rostfreien Edelstahl gefertigt. Dies hat jedoch den Nachteil, dass das Magnetfeld zwischen Stator und Rotor beeinträchtigt wird, so dass es zu einer Verschlechterung des Wirkungsgrades des Motors kommt. Ferner sind Spaltrohre aus Kunststoff bekannt, bei welchen dieses Problem nicht auftritt. Diese Spaltrohre haben jedoch den Nachteil, dass geringe Mengen von Fluid durch das Spaltrohr hindurch in den Statorraum diffundieren. Aus diesem Grunde können derartige Spaltrohre insbesondere bei Tauchpumpen, bei welchen keinerlei Möglichkeit besteht, das Fluid aus dem Statorraum abzuleiten, nicht verwendet werden. Bei derartigen Pumpen müssen bislang zwingend Spaltrohre aus Metall eingesetzt werden, welche den Wirkungsgrad der Pumpe verschlechtern, oder der Stator muss mit einer das Fluid aufnehmenden oder die Wicklungen schützenden Vergussmasse vergossen werden.

Das Dokument EP-A-0 658 967 beschreibt eine Magnetkupplung zwischen einem Motor und einem Pumpengehäuse. Der dort beschriebene Spalttopf ist aus kohlefaserverstärktem Kunststoff hergestellt und hat eine aus amorphen Kohlenstoff bestehende Beschichtung. Dadurch soll die Gleitreibung zwischen dem Topf und den anderen in der Magnetkreiselpumpe auftretenden Substanzen möglichst weit herabgesetzt werden.

Es ist Aufgabe der Erfindung ein verbessertes Pumpenaggregat mit einem Spaltrohr zu schaffen, welches zum einen einen höheren Wirkungsgrad des Pumpenaggregates ermöglicht und zum anderen sicher ein Eindringen von Fluid in den Statorraum verhindern.

Diese Aufgabe wird durch ein Pumpenaggregat mit den im Anspruch 1 angegebenen Merkmalen gelöst. Bevorzugte Ausführungsformen ergeben sich aus den zugehörigen Unteransprüchen.

Das erfindungsgemäße Pumpenaggregat weist ein Spaltrohr aus einem nicht metallischen Material auf, d. h. aus einem Material, welches das Magnetfeld zwischen Rotor und Stator möglichst wenig oder nicht beeinflusst. Dadurch, dass das Magnetfeld durch das Spaltrohrmaterial unbeeinflusst bleibt, werden Wirkungsgradverschlechterungen aufgrund der Anordnung des Spaltrohres zwischen Stator und Rotor vermieden. Erfindungsgemäß ist das nicht metallische Material des Spaltrohrs mit zumindest einer zusätzlich hermetisch dichtenden Schicht in Form einer Metallisierung versehen. Eine solche zusätzliche Schicht, welche vorzugsweise an der äußeren oder der inneren Umfangsfläche oder an beiden Umfangsflächen aufgebracht wird, ermöglicht es, für das Spaltrohr einen Werkstoff einzusetzen, welcher für sich allein die ausreichende Diffusionsdichtigkeit nicht aufweist. Das heißt, es kann ein Werkstoff gewählt werden, welcher vorrangig eine ausreichende Stabilität des Spaltrohres gewährleistet.

Die Beschichtung ist als Metallisierung des nicht metallischen Materials ausgebildet. Das heißt auf die innere und/oder äußere Umfangsfläche des Spaltrohrs wird eine Metallschicht aufgebracht, beispielsweise aufgedampft. Diese Metallschicht sorgt dann für die hermetische Abdichtung. Die Beschichtung des nicht metallischen Materials, beispielsweise durch Metallisierung mit einem geeigneten Metall, erfolgt zweckmäßigerweise so, dass die gesamte Umfangsfläche, welche die Trennung zwischen Rotorraum im Inneren des Spaltrohrs und dem umgebenden Statorraum bildet, entsprechend beschichtet ist, so dass in diesem Bereich keine Fluid, beispielsweise Wasser vom Inneren des Spaltrohrs durch die Spaltrohrwandung hindurch in den umgebenden Statorraum eindringen kann.

Die Diffusionsdichtigkeit in der Weise, dass im Inneren des Spaltrohrs, d. h. im Rotorraum befindliches Fluid nicht durch das Spaltrohr hindurch in den Statorraum eindringen kann, wird durch die zusätzliche auf der Oberfläche des nicht metallischen Materials aufgebrachte Schicht erreicht. Es können auch mehrere Schichten verschiedener Materialien in Kombination Verwendung finden, um die gewünschte hermetische Abdichtung zwischen dem Innenraum des Spaltrohres und dem äußeren Umfangsbereich des Spaltrohres zu erzielen. So kann die Spaltrohrwandung mehrschichtig aus dem nicht metallischen Material und einer oder mehreren Schichten weiterer Materialien aufgebaut werden, welche die Diffusionsdichtigkeit gewährleisten.

Weiter bevorzugt ist die zumindest eine Schicht als Beschichtung an der inneren und/oder äußeren Umfangsfläche des nicht metallischen Materials ausgebildet. Eine solche Beschichtung kann nach der Fertigung bzw. Formgebung des Teils aus nicht metallischem Material auf dessen Oberfläche aufgebracht werden, beispielsweise durch Aufsprühen oder Aufdampfen.

Besonders bevorzugt ist das Spaltrohr aus Kunststoff und vorzugsweise einem faserverstärkten Kunststoff gefertigt. Kunststoff ermöglicht eine kostengünstige Herstellung des Spaltrohrs, beispielsweise im Spritzgussverfahren. Ferner weist Kunststoff keinerlei magnetische Eigenschaften auf und beeinflusst daher nicht das Magnetfeld zwischen Stator und Rotor. Ferner lässt sich Kunststoff geeignet beschichten bzw. mit weiteren umgebenden und innenliegenden Kunststoffschichten versehen, nach Art des Koexdrudierens. Auch eine Metallisierung von Kunststoff ist problemlos möglich. Der faserverstärkte Aufbau kann die Stabilität bzw. die Druckfestigkeit des Spaltrohres verbessern.

Bevorzugt ist das Spaltrohr aus einem rohrförmigen Bauteil und einem Bodenelement gefertigt, welches das rohrförmige Bauteil an einem ersten axialen Ende verschließt. Dies ermöglicht eine vereinfachte Fertigung des Spaltrohres, welche beispielsweise auch die Fertigung dünnwandiger Kunststoffspaltrohre im Spritzgussverfahren ermöglicht. Beim Spritzgießen des Spaltrohres kann es zweckmäßig sein, dass ein den Hohlraum im Inneren des Spaltrohrs bildender Kern an beiden axialen Enden des Spaltrohrs gehalten wird, um eine sehr dünnwandige Ausbildung des Spaltrohres zu erzielen. So wird zunächst das rohrförmige Bauteil gefertigt und dann später das Bodenelement in dieses rohrförmige Bauteil eingesetzt, um eine axiale Öffnung des rohrförmigen Bauteiles zu schließen und einen Spaltrohr-Topf zu bilden. Die entgegengesetzte Axialseite des Spaltrohres ist offen ausgebildet, so dass sich durch diese Axialseite die Rotorwelle zum Pumpenraum erstrecken kann. Das Bodenelement kann in das rohrförmige Bauteil kraft-, form- und/oder stoffschlüssig eingesetzt sein, so dass eine feste stabile und vorzugsweise dichte Verbindung zwischen dem rohrförmigen Bauteil und dem Bodenelement geschaffen wird.

Besonders bevorzugt ist das Bodenelement mit dem rohrförmigen Bauteil vergossen. Dabei kann nach Fertigung des rohrförmigen Bauteils das Bodenelement in einem zweiten Fertigungsschritt im Spritzgussverfahren an das rohrförmige Bauteil angespritzt bzw. angegossen bzw. in das rohrförmige Bauteil eingegossen werden, so dass eine dauerhafte dichte Verbindung zwischen beiden Elementen geschaffen wird.

Das rohrförmige Bauteil und das Bodenelement sind weiter bevorzugt beide aus einem nicht metallischen Material, vorzugsweise Kunststoff gefertigt und nach dem Zusammensetzen gemeinsam mit der zusätzlichen Schicht oder Beschichtung versehen. Auf diese Weise wird durch die Beschichtung zusätzlich auch der Bereich des Bodenelementes und insbesondere der Übergangsbereich zwischen rohrförmigen Bauteil und Bodenelement hermetisch gedichtet. Beispielsweise können das rohrförmige Bauteil und das Bodenelement gemeinsam metallisiert werden. Alternativ kann die zusätzliche Schicht an dem Bodenelement auch separat angebracht oder in dieses integriert werden.

Gemäß einer weiteren bevorzugten Ausführungsform ist an einem axialen Ende des Spaltrohres, vorzugsweise an dem dem Pumpenraum und dem Laufrad der Pumpe zugewandten Ende, am Außenumfang ein sich radial nach außen erstreckender, vorzugsweise metallischer Kragen ausgebildet. Dieser metallische Kragen dient z. B. dem stirnseitigen Verschluss des Statorgehäuses, in welchem die Statorwicklung angeordnet ist. Das Statorgehäuse ist insbesondere bei Anwendung in einer Tauchpumpe vorzugsweise hermetisch gekapselt, so dass kein Fluid in das Innere des Statorgehäuses eindringen kann. So werden die Spulen im Inneren des Statorgehäuses insbesondere vor Feuchtigkeit geschützt.

Der metallische Kragen, welcher am Außenumfang des Spaltrohres angebracht ist, dient der Verbindung mit den äußeren Teilen des Statorgehäuse und ermöglicht das Spaltrohr mit dem übrigen Statorgehäuse zu verschweißen.

Der Kragen ist vorzugsweise mit dem nicht metallischen Material form- und/oder stoffschlüssig verbunden und gemeinsam mit diesem mit der zusätzlichen Schicht oder Beschichtung versehen. Alternativ ist auch eine kraftschlüssige Verbindung denkbar, sofern eine ausreichende Festigkeit und Dichtigkeit gewährleistet wird. Die gemeinsame Beschichtung des nicht metallischen Materials des Spaltrohrs und des Kragens hat den Vorteil, dass durch die Beschichtung insbesondere auch der Übergangsbereich zwischen dem nicht metallischen Material und dem Kragen hermetisch gedichtet wird. Um in diesem Bereich eine dauerhafte Dichtung zu gewährleisten ist eine besonders feste Verbindung zwischen dem metallischen Kragen und dem nicht metallischen Material des Spaltrohres bevorzugt, so dass Bewegungen zwischen beiden Elementen, welche zum Reißen der Beschichtung führen könnten, vermieden werden.

Um eine besonders feste Verbindung zwischen dem metallischen Kragen und dem nicht metallischen Material zu erreichen, wird der metallische Kragen vorzugsweise direkt bei der Fertigung des Spaltrohres mit dem nicht metallischen Material verbunden. Im Falle des Spritzgießen des Spaltrohres aus Kunststoff kann beispielsweise der metallische Kragen vor dem Spritzgießen in das Werkzeug eingesetzt werden und der Kunststoff an den Kragen angespritzt bzw. ein Teil des Kragens mit Kunststoff umspritzt werden, so dass direkt beim Spritzgießen eine form- und stoffflüssige Verbindung zwischen beiden Elementen erzielt wird.

Um die Verbindung zwischen dem Kragen und dem nicht metallischen Material weiter zu verbessern, wird eine Oberfläche des Kragens vorzugsweise vor der Verbindung mit dem nicht metallischen Material des Spaltrohres strukturiert bzw. aufgeraut. Dies kann beispielsweise durch Laserbestrahlung geschehen, wobei mittels eines Laserstrahls kleine Vertiefungen und/oder kraterförmige Erhöhungen in die Oberfläche des Kragens eingebracht werden, in welche das nicht metallische Material, beispielsweise Kunststoff beim Gießen fließt und somit zum einen über eine größere Oberfläche und zum anderen über einen Formschluss eine feste Verbindung mit dem Kragen herstellt.

Der Elektromotor ist vorzugsweise ein Permanentmagnetmotor, d.h. der Rotor ist mit Permanentmagneten bestückt. Um einen hohen Wirkungsgrad zu erzielen, werden vorzugsweise besonders starke, beispielsweise Neodyniummagnete, eingesetzt. Die Kombination von Permanentmagneten mit dem nicht metallischen Spaltrohr hat den Vorteil, dass auch mittels eines Permanentmagnetrotors ein hoher Wirkungsgrad des Motors erzielt werden kann, da das Spaltrohr das Magnetfeld nur wenig oder gar nicht beeinträchtigt.

Besonders bevorzugt ist das Pumpenaggregat als Tauchpumpenaggregat ausgebildet. Bei einem Tauchpumpenaggregat hat das erfindungsgemöße hermetisch gedichtete Spaltrohr besondere Vorteile. Gerade bei Tauchpumpenaggregaten ist es wichtig, zu verhindern, dass Fluid, insbesondere Feuchtigkeit vom Rotorraum in den Statorraum eindringt, da keine Möglichkeit besteht, die Feuchtigkeit im Statorraum durch die Abwärme des Motors zu verdampfen, da der Statorraum noch außen hermetisch gekapselt ist.

Weiter bevorzugt ist ein Laufrad des Pumpenaggregates durch den Elektromotor mit einer Maximaldrehzahl größer 20.000 U/min antreibbar und das Laufrad im Bereich des Saugmundes axial abgedichtet. Die Drehzahl kann auch größer 25.000 oder 30.000 U/min sein. Die hohe Drehzahl ermöglicht eine hohe Förderleistung der Pumpe mit einem Laufrad mit kleinem Durchmesser. Der kleine Durchmesser des Laufrades ermöglicht die Reibung und damit die Verluste des Pumpenaggregates zu minimieren. Die axiale Abdichtung des Saugmundes hat den Vorteil, dass die axiale Fläche des Laufrades gleichzeitig als Dichtfläche dienen kann, so dass die Anzahl der erforderlichen Dichtelemente verringert wird, und eine einfache Dichtung im Bereich des Saugmundes ausgebildet werden kann. Dies ermöglicht weiter die Reibung im Pumpenaggregat und damit die Verlustleistung zu minimieren.

Besonders bevorzugt bildet darüber hinaus zumindest eine axiale Stirnseite des Laufrades eine Axiallagerfläche. Auf diese Weise wird die Anzahl der erforderlichen Bauteile zur Lagerung des Rotors verringert, da das Laufrad selber Teil des Axiallagers sein kann. Dies ermöglicht zum einen einen vereinfachten und kompakten Aufbau des gesamten Pumpenaggregates und zum anderen, die Verlustleistung weiter zu minimieren und somit den Wirkungsgrad zu steigern. Besonders bevorzugt dient die Lagerfläche gleichzeitig als axiale Dichtfläche. Dies hat den weiteren Vorteil, dass keine zusätzlichen Andruckelemente erforderlich sind, um die Dichtung in Anlage zu halten. In dem Axiallager, welches ein Gleitlager bildet, stellt sich selbsttätig ein ausreichend kleiner Spalt ein, welcher für eine zuverlässige Dichtung sorgt und gleichzeitig einen ausreichenden Schmierfilm an der Lagerfläche gewährleistet. Der Spalt liegt vorzugsweise im Bereich von einigen Mikrometern. Dies gewährleistet eine besonders gute Abdichtung am Saugmund, welche weiter dazu beiträgt, den Wirkungsgrad des Pumpenaggregates zu steigern.

Weiter bevorzugt ist das Laufrad an seiner Axialseite, an welcher die Laufradschaufeln angeordnet sind, offen ausgebildet und bilden die axialen Stirnseiten der Laufradschaufeln eine Axiallagerfläche des Laufrades. Das bedeutet, die axialen freien Stirnseiten der Laufradschaufeln dienen der Axiallagerung des Laufrades und damit der Rotorwelle und gleichzeitig der Abdichtung des Laufrades an seiner offenen Stirnseite. Auf diese Weise wird sehr einfach eine besonders gute Abdichtung erreicht, da die Laufradschaufeln durch die auftretende Axialkraft, welche von dem Axiallager aufgenommen werden soll, gegen eine gegenüberliegende Axiallagerfläche, beispielsweise einer Gegenlaufscheibe, gedrückt werden. Dadurch wird ein sehr geringer Spalt zwischen den axialen Stirnseiten der Schaufeln und der Gegenlaufscheibe geschaffen, welcher gleichzeitig eine gute Abdichtung und einen ausreichenden Schmierfilm im Axialengleitlager sicherstellt.

Zweckmäßigerweise ist das Laufrad auf der Rotorwelle in axialer Richtung fixiert, so dass das Laufrad die Axiallagerfunktion des gesamten Rotors übernehmen kann. Das heißt die axiale Lagerung des ganzen Rotors erfolgt am Laufrad, vorzugsweise in einem Gleitlager, dessen eine Axiallagerfläche von der axialen Stirnseite des Laufrades, vorzugsweise von den axialen Stirnseiten der Laufradschaufeln gebildet wird.

Gemäß einer weiteren bevorzugten Ausführungsform ist die dem Elektromotor zugewandte axiale Stirnseite des Laufrades als Dichtfläche zur Abdichtung des Rotorraumes des Elektromotors ausgebildet. Das heißt hier wird vorzugsweise auch eine axiale Dichtfläche bereitgestellt, an welcher ein feststehendes Dichtungselement, beispielsweise ein Dichtring anliegt. Dieser Dichtring kann durch Federvorspannung oder elastische Eigenspannung gegen die Dichtfläche gedrückt werden. Die Abdichtung des Rotorraumes ist bevorzugt, um zu verhindern, dass Verunreinigungen aus dem von dem Pumpenaggregat zu fördernden Fluid, welches vorzugsweise Wasser ist, in den Rotorraum eindringen und dort zu unerwünschter Reibung oder möglicherweise sogar zur Beschädigung des Rotors führen kann. Der Rotorraum kann werksseitig mit Fluid vorgefüllt werden. Alternativ ist es möglich, dass das Fluid bei Erstinbetriebnahme des Pumpenaggregates in den Rotorraum eindringt. Dies kann dadurch gewährleistet werden, dass die Dichtung zwischen Laufrad und Rotorraum nicht völlig fluiddicht ausgebildet ist, sondern lediglich so gestaltet ist, dass keine Verunreinigung oder nur geringe Mengen von Fluid in den Rotorraum eintreten können. So wird der Fluidaustausch zwischen Pumpenraum, in welchem das Laufrad rotiert, und Rotorraum im Inneren des Spaltrohrs minimiert oder unterbunden. Dadurch dass die Dichtfläche direkt am Laufrad bereitgestellt wird, kann eine sehr einfache Abdichtung mit einer minimierten Anzahl von Bauteilen gewährleistet werden. Ferner kann durch die ausreichende Abdichtung sichergestellt werden, dass es nicht zu Reibungsverlusten durch Verunreinigungen kommt, wodurch ein hoher Wirkungsgrad des Pumpenaggregates dauerhaft sichergestellt werden kann.

Das Laufrad weist besonders bevorzugt zumindest eine Oberfläche aus Hartmetall oder Keramik auf und ist vorzugsweise vollständig aus Hartmetall oder Keramik gefertigt. Diese Ausgestaltung ermöglicht den Verschleiß der Laufradschaufeln aufgrund von Verunreinigungen im Fluid, beispielsweise Sandpartikeln, zu minimieren oder zu verhindern. Darüber hinaus ermöglicht die besonders harte und verschleißfeste Ausgestaltung der Laufradoberflächen die Verwendung als Gleitlager- bzw. Axiallagerflächen, so dass auf zusätzliche Lagerschalen bzw. Lagerelemente verzichtet werden kann. Die verschleißfeste Ausgestaltung des Laufrades ermöglicht darüber hinaus die Drehzahl des Laufrades weiter zu steigern, ohne dass es zu übermäßigem Verschleiß kommt. Dies ermöglicht den Wirkungsgrad des Pumpenaggregates zu steigern, ohne das weitere Stufen vorgesehen werden müssen. Gleichzeitig kann das Laufrad sehr klein ausgebildet werden. Ein kleiner Laufraddurchmesser führt zur Verringerung von Reibungsverlusten, wodurch der Wirkungsgrad des Pumpenaggregates weiter gesteigert werden kann. Alternativ zur Ausbildung aus Hartmetall und Keramik bzw. zur Oberflächenbeschichtung mit Hartmetall oder Keramik können auch andere Verfahren oder Beschichtungen zur Oberflächenhärtung des Laufrades verwendet werden, vorausgesetzt, dass eine ausreichende Verschleißfestigkeit der Oberflächen erreicht wird. Bevorzugt ist beispielsweise eine Härte der Laufradoberfläche größer 1000 HV. Die Ausbildung des Laufrades vollständig aus Hartmetall oder Keramik kann beispielsweise im Sinterverfahren erfolgen, wobei die Laufradschaufeln anschließend vorzugsweise geschliffen werden, um die Stirnseiten der Laufradschaufeln als definierte Axiallager- und Dichtfläche auszubilden. Falls die entgegengesetzte Stirnseite des Laufrades ebenfalls als Dichtfläche ausgebildet werden soll, wird auch diese vorzugsweise geschliffen, um eine definierte Anlagefläche zu schaffen.

Das erfindungsgemäße Pumpenaggregat weist besonders bevorzugt lediglich eine Stufe auf. Durch die Ausbildung als einstufiges Pumpenaggregat wird die Anzahl der erforderlichen Einzelteile deutlich verringert. Ferner verringert sich die im gesamten Pumpenaggregat auftretende Reibung, wodurch der Wirkungsgrad gesteigert werden kann. Darüber hinaus ist es problemlos möglich, wie oben beschrieben, das Laufrad auf der Rotorwelle in axialer Richtung zu fixieren, was wiederum ermöglicht, dass das Laufrad in axialer Richtung am Saugmund abgedichtet werden kann und vorzugsweise das Laufrad gleichzeitig an seiner dem Elektromotor abgewandten Stirnseite eine Axiallagerfläche für die Gleitlagerung des gesamten Rotors in axialer Richtung bildet. Durch diese axiale Anlage des Laufrades kann wiederum eine sehr gute Abdichtung des Laufrades erzielt werden, wodurch der Wirkungsgrad gesteigert wird. Die insgesamt verminderte Reibung ermöglicht es vorzugsweise, das gesamte Pumpenaggregat mit hoher Drehzahl, beispielsweise größer 20.000 U/min, zu betreiben, wodurch auch mit nur einer Stufe eine hohe Förderleistung erreicht werden kann. Gleichzeitig ist, wie vorangehend beschrieben, bevorzugt das Laufrad auch in seinem Durchmesser sehr klein auszubilden, wodurch die Verlustleistung weiter verringert und gleichzeitig der Betrieb mit hoher Drehzahl begünstigt wird. Besonders bevorzugt wird auch der Durchmesser des Rotors sehr klein ausgebildet, was durch besonders starke Permanentmagneten und einen hohen Wirkungsgrad des Elektromotors erreicht werden kann, wodurch die Reibungsverluste im Motors minimiert werden können und der Hochdrehzahlbetrieb begünstigt wird. Besonders bevorzugt ist der Rotordurchmesser kleiner als 25 mm, weiter bevorzugt kleiner 20 mm. Je kleiner der Rotordurchmesser ist, um so geringer ist die auftretende Reibung.

Um bei kleinem Rotordurchmesser eine ausreichende Leistung des Elektromotors bereitstellen zu können, kann der im Durchmesser verkleinerte Elektromotor in axialer Richtung länger ausgebildet werden. Um dies zu ermöglichen, wird vorzugsweise eine sehr steife Rotorwelle vorgesehen. Eine solche sehr steife Rotorwelle kann dadurch erreicht werden, dass die Rotorwelle einschließlich des axialen Endes, an welchem das Laufrad angebracht wird einstückig, idealerweise einstückig mit dem gesamten Rotor ausgebildet wird.

Weiter bevorzugt ist eine dem Laufrad zugewandte Gegenlaufscheibe vorgesehen, welche an einer Axialseite des Laufrades, vorzugsweise der dem Elektromotor abgewandten Axialseite, derart anliegt, dass sie eine Axiallagerfläche bildet. So wird zwischen der axialen Stirnseite des Laufrades bzw. den Laufradschaufeln und der Gegenlaufscheibe ein Gleitlager gebildet, welches als Axiallager des Laufrades und des gesamten Rotors dienen kann.

Die Gegenlaufscheibe weist vorzugsweise ebenfalls zumindest eine Oberfläche aus Hartmetall oder keramischen Material auf, um die für eine Gleitlager- und Dichtfläche erforderlichen Verschleißeigenschaften auch bei hohen Drehzahlen sicherstellen zu können. Es ist auch möglich, die Gegenlaufscheibe vollständig aus Hartmetall oder keramischen Material auszubilden. Besonders bevorzugt wird nur der dem Laufrad zugewandte Teil der Gegenlaufscheibe aus einem solchem Material ausgebildet. Der dem Laufrad abgewandte Teil kann aus einem anderen Material oder Metall ausgebildet sein und mit dem dem Laufrad zugewandten Teil beispielsweise verklebt sein. Auch alternative Verfahren oder Ausgestaltungen, welche eine ausreichende Härte bzw. Verschleißfestigkeit der Oberfläche der Gegenlaufscheibe sicherstellen, können hier zum Einsatz kommen.

Die dem Laufrad abgewandte Axialseite der Gegenlaufscheibe ist vorzugsweise sphärisch, d. h. halbkugelförmig ausgebildet. Dies ermöglicht die Gegenlaufscheibe in einer korrespondierenden kugel- bzw. halbkugelförmigen Aufnahme zu lagern, so dass eine Selbstzentrierung bzw. Selbstausrichtung der Gegenlaufscheibe parallel zu dem Laufrad bzw. der axialen Stirnseite des Laufrades erreicht wird. Dies vereinfacht zum einen die Montage und stellt zum anderen einen verschleißfreien und sicheren Betrieb des Pumpenaggregates auch bei hohen Drehzahlen sicher.

Bevorzugt ist das Laufrad von einem Spiralgehäuse oder Leitapparat umgeben, wodurch das radial aus dem Laufrad austretende geförderte Fluid so umgelenkt wird, dass es vorzugsweise in axialer Richtung weitergeleitet und aus dem Pumpenaggregat in eine Anschlussleitung geführt werden kann.

Besonders bevorzugt ist das Laufrad dazu von einem Spiralgehäuse umgeben, welches sich derart schraubenförmig erstreckt, dass die Austrittsöffnung des Spiralgehäuses in axialer Richtung zu dem Laufrad, d. h. parallel zu dessen Rotationsachse ausgerichtet ist. Dies bewirkt, dass das Fluid, welches in tangentialer/radialer Richtung aus dem Laufrad austritt, von dem Spiralgehäuse möglichst verlustfrei zu einer axial gerichteten Austrittsöffnung des Pumpenaggregates umgelenkt wird.

Nachfolgend wird die Erfindung beispielhaft anhand der beigefügten Figuren beschrieben. In diesen zeigt:
- Fig. 1: eine Schnittansicht eines erfindungsgemäßen Pumpenaggregates,
- Fig. 2: eine Schnittansicht des Spaltrohrs des Elektromotors,
- Fig. 3: eine Ausschnittsvergrößerung von Fig. 2,
- Fig. 4: eine Schnittansicht des Elektromotors,
- Fig. 5: eine Ansicht des Laufrades mit den Laufradschaufeln und
- Fig. 6: eine Ansicht der den Laufradschaufeln abgewandten Stirnseite des Laufrades.

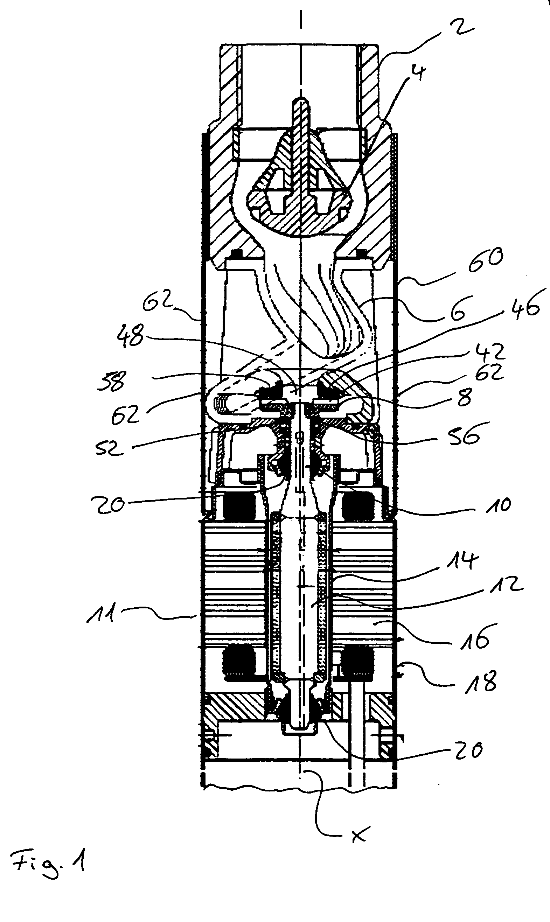

Fig. 1 zeigt eine Schnittansicht des oberen Endes einer Tauchpumpe. Das untere Ende, in welchem die Elektronik zur Steuerung bzw. Regelung der Pumpe angebracht ist, ist in der Figur nicht gezeigt. Das Pumpenaggregat weist an seinem oberen Ende einen Anschlussstutzen 2 mit einem darin angeordneten Rückschlagventil 4 auf. An den Anschlussstutzen 2 schließt sich im Inneren des Pumpenaggregats stromaufwärts ein Spiralgehäuse 6 an, welches das Laufrad 8 umgibt. Das Laufrad 8 ist am axialen Ende der einstückigen Rotorwelle 10 des Elektromotors 11 bzw. dessen Permanentmagnetrotors 12 angeordnet. Das Laufrad 8 ist fest an der Rotorwelle 10 fixiert, insbesondere auch in axialer Richtung X fest verbunden. Der Permanentmagnetrotor 12 läuft im Inneren eines Spaltrohres 14, welches an seinem Außenumfang ringförmig von dem Stator 16 umgeben ist. Der Stator 16 ist in bekannter Weise als Blechpaket mit Spulenwicklungen ausgebildet. Der Stator 16 ist insgesamt in einem Statorgehäuse 18 hermetisch gekapselt. Die Rotorwelle 10 ist in zwei Radiallagern 20 in radialer Richtung gelagert. Diese Radiallager 20 sind vorzugsweise selbstzentrierend ausgebildet, so dass eine leichte Montage und ein sicherer Betrieb auch bei hohen Drehzahlen gewährleistet ist.

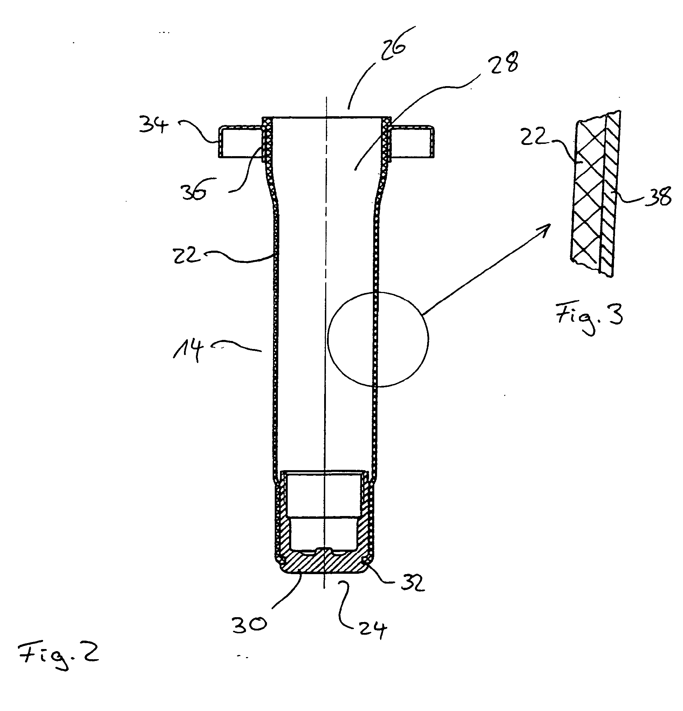

Das Spaltrohr 14 ist, wie in Figuren 2 und 3 im Detail gezeigt, im gezeigten Beispiel aus Kunststoff ausgebildet. Das Spaltrohr ist aus einem rohrförmigen Bauteil 22 gebildet, welches aus faserverstärktem Kunststoff im Spritzgussverfahren hergestellt wird. Um das rohrförmige Bauteil 22 besonders dünnwandig mit der geforderten Präzision fertigen zu können, wird das rohrförmige Bauteil 22 zunächst mit offenen axialen Enden 24 und 26 ausgebildet. Dies ermöglicht, dass ein Kern, welcher den Innenraum 28 des Spaltrohres 14, welcher später den Rotorraum bildet, formt, an beiden axialen Enden im Werkzeug fixiert werden kann. Nach dem Spritzgießen des rohrförmigen Bauteiles 22 wird dieses dann an dem axialen Ende 24 durch ein Bodenelement 30 verschlossen, so dass ein Spaltrohrtopf gebildet wird. Das Bodenelement 30 kann vorzugsweise ebenfalls aus Kunststoff ausgebildet sein und in das zuvor gespritzte rohrförmige Bauteil 2 eingegossen werden. Alternativ kann das Bodenelement 30 separat gefertigt und später in das rohrförmige Bauteil 22 eingesteckt werden. Wie gezeigt wird eine formschlüssige Verbindung zwischen Bodenelement 30 und rohrförmigem Bauteil 22 dadurch hergestellt, dass die nach innen gebogene axiale Umfangskante des rohrförmigen Bauteils 22 in eine umfängliche Nut 32 des Bodenelementes 30 eingreift.

Am entgegengesetzten axialen Ende 26, welches dem Laufrad 8 zugewandt ist, ist am Außenumfang des rohrförmigen Bauteils 22 ein Kragen 34 angesetzt. Der Kragen 34 ist aus Metall, vorzugsweise rostfreiem Edelstahl ausgebildet und ringförmig, wobei sein Innendurchmesser auf den Außendurchmesser des rohrförmigen Bauteils 22 am axialen Ende 26 abgestimmt ist. Der Ring des Kragens 34 weist einen u-förmigen Querschnitt auf, wobei der Querschenkel dem axialen Ende 26 zugewandt ist. Die Innenwandung 36 des Kragens 34 liegt parallel an der Umfangswandung des rohrförmigen Bauteils 22 an und ist mit dieser verbunden.

Die Verbindung zwischen der Innenwandung 36 des Kragens 34 und dem rohrförmigen Bauteil 22 erfolgt schon während des Fertigungs-, d. h. Gießprozesses des rohrförmigen Bauteils 22, indem zuvor der Kragen 34 in das Werkzeug eingelegt wird, so dass das rohrförmige Bauteil 22 direkt an die Innenwandung 36 des Kragens 34 angegossen wird. So wird eine feste form- und/oder stoffschlüssige Verbindung zwischen dem Kunststoff des rohrförmigen Bauteils 22 und der Innenwandung 36 des Kragens 34 geschaffen. Um diese Verbindung zu verbessern, wird die Innenwandung 36 an ihrem Innenumfang zuvor aufgeraut bzw. strukturiert. Dies kann vorzugsweise durch Laserbearbeitung geschehen, mittels welcher in das Metall bzw. das Blech des Kragens 34 an der Oberfläche kleine Vertiefungen eingebracht werden, in welche dann der Kunststoff des rohrförmigen Bauteils 22 beim Spritzgießen fließt. Diese Vertiefungen können besonders bevorzugt auch noch Hinterschneidungen aufweisen, durch welche eine noch festere Verbindung zwischen beiden Elementen geschaffen wird.

Nach dem Spritzgießen des rohrförmigen Bauteils 22, bei welchen gleich der Kragen 34 fest mit dem rohrförmigen Bauteil 22 verbunden wird, und dem anschließenden Einsetzen des Bodenelementes 30 wird das so geschaffene Spaltrohr 14 metallisiert. Dabei wird auf der Außenfläche des Spaltrohres 14 ein dünne Metallschicht 38 aufgebracht, wie in Fig. 3 dargestellt. Die Metallschicht 38 überzieht die gesamte Außenfläche des rohrförmigen Bauteils 22 und des Bodenelementes 30 sowie den Kragen 34. Dadurch werden insbesondere auch die Übergangsbereiche zwischen dem Kragen 34 und dem rohrförmigen Bauteil 22 sowie zwischen dem Bodenelement 30 und dem rohrförmigen Bauteil 22 durch die Metallschicht 38 überdeckt. Die Metallschicht 38 sorgt dafür, dass eine hermetische Abdichtung des Spaltrohres 14 und insbesondere der Umfangswandung des rohrförmigen Bauteils 22 geschaffen wird. Diese hermetische Abdichtung durch die Metallschicht 38 bewirkt, dass Fluid, welches sich im Rotorraum 28 befindet, nicht durch das Spaltrohr 14 hindurch in das Innere des Statorgehäuses 18, in welchem der Stator 16 angeordnet ist, eindringen kann. Die Metallisierung bzw. Beschichtung 38 ermöglicht dabei die Verwendung eines Kunststoffes für das rohrförmige Bauteil 22 und das Bodenelement 30, welcher an sich nicht diffusionsdicht ist. So kann hier der Kunststoff rein nach den Erfordernissen der Stabilität für das Spaltrohr 14 sowie nach Fertigungsgesichtspunkten ausgewählt werden.

Vorangehend wurde ein Spaltrohr 14 beschrieben, welches an seiner Außenseite mit der Metallschicht 38 versehen ist. Alternativ ist es auch möglich, das Spaltrohr 14 sowohl an seiner Außenseite als auch an den Innenflächen des Innenraums 28 mit einer Metallschicht durch Metallisierung zu versehen. Ferner ist es alternativ auch möglich, das Spaltrohr nur an den Innenwandungen des Innenraumes 28 zu metallisieren.

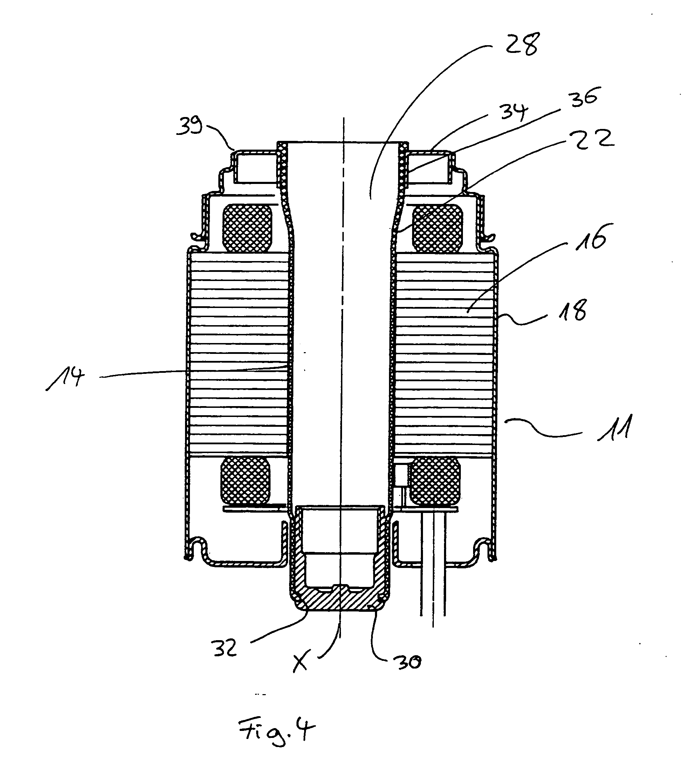

Der metallische Kragen 34 dient dazu, das Spaltrohr 14 mit dem übrigen Teil des Statorgehäuses 18 zu verbinden. Dies kann insbesondere durch eine Schweißnaht 39 am Außenumfang des metallischen Kragens 34 geschehen. Der Kragen 34 stellt somit die Verbindung zu anderen metallischen Bauelementen, aus denen das Statorgehäuse 18 gebildet ist, her, wie in Fig. 4 gezeigt.

Die Verwendung des Spaltrohres 14 aus Kunststoff, d. h. einem nichtmetallischen Material ohne magnetische Eigenschaften hat den Vorteil, dass das Spaltrohr 14 das Magnetfeld zwischen Stator 16 und Permanentmagnetrotor 12 nur wenig oder gar nicht beeinflusst, wodurch der Wirkungsgrad des Elektromotors 11 erhöht wird.

Bei dem erfindungsgemäßen Pumpenaggregat ist der Durchmesser des Permanentmagnetrotors 12 und des Laufrades 8 klein gehalten, um die Reibung im System und somit die Verlustleistung möglichst zu minimieren. Um dennoch einen hohen Wirkungsgrad des Elektromotors 11 zu gewährleisten, ist der Permanentmagnetrotor 12 mit besonders starken Permanentmagneten, beispielsweise Neodyniummagneten bestückt. Im gezeigten Beispiel beträgt der Rotordurchmesser 19 mm. Der gezeigte Elektromotor 11 ist für sehr hohe Drehzahlen > 20.000, insbesondere zwischen 25.000 und 30.000 U/min ausgelegt. So kann mit nur einem Laufrad 8 mit vergleichsweise kleinem Durchmesser eine ausreichend hohe Förderleistung erreicht werden.

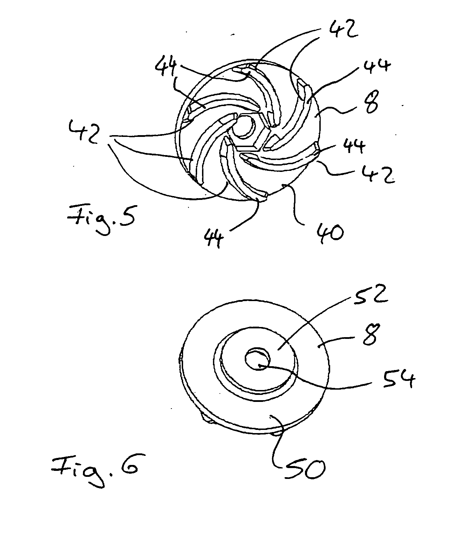

Das Laufrad 8, welches in Figuren 5 und 6 als Einzelteil gezeigt ist, ist, um eine hohe Verschleißfestigkeit zu gewährleisten, aus Hartmetall gefertigt. An einer Axialseite 40, welche im eingebauten Zustand dem Elektromotor 11 abgewandt ist, sind die Laufradschaufeln 42 ausgebildet. Das Laufrad 8 ist offen ausgebildet, d. h. die Laufradschaufeln stehen von der Axialseite 40 des Laufrades 8 vor und sind an ihren Stirnseiten 44 nicht durch eine Abdeckscheibe geschlossen.

Die Stirnseiten bzw. Stirnkanten 44 der Laufradschaufeln 42 sind geschliffen und bilden so eine Axiallager- und Dichtfläche des Laufrades 8. Die Stirnseiten 44 liegen im eingebauten Zustand an einer Gegenlaufscheibe 46 an, welche den Saugmund 48 der Pumpe ringförmig umgibt. Durch die feste Verbindung des Laufrades 8 mit der Rotorwelle 10 stützt sich der gesamte Rotor 12 über das Laufrad 8 in axialer Richtung an der Gegenlaufscheibe 46 ab. D. h. die Stirnfläche der Gegenlaufscheibe 46, welche dem Laufrad 8 zugewandt ist, und die Stirnseiten 44 der Laufradschaufeln 42 bilden ein axiales Gleitlager. Durch die axiale Andruckkraft des Laufrades 8 werden die Stirnseiten 44 der Laufradschaufeln 42 so gegen die Gegenlaufscheibe 46 gedrückt, dass es zu einer besonders guten Abdichtung zwischen den Laufradschaufeln 42 und der Gegenlaufscheibe 46 kommt. Dadurch werden Verluste in der Pumpe minimiert und die Förderleistung des Pumpenaggregates gerade bei der oben beschriebenen hohen Motordrehzahl weiter gesteigert. Auf diese Weise kann mit dem beschriebenen sehr kleinen Laufrad auch bei einstufiger Ausgestaltung des Pumpenaggregates eine hohe Förderleistung erreicht werden. Das Laufrad 8 übernimmt dabei die a-xialseitige Abdichtung gegenüber der Gegenlaufscheibe 46 am Saugmund 48 und gleichzeitig die Axiallagerfunktion, so dass hier auch die Zahl der Bauteile und die auftretende Reibung minimiert werden.

Die den Laufradschaufeln 42 abgewandte Rückseite 50 des Laufrades 8 weist eine weitere ringförmige Dichtfläche 52 auf, welche die Öffnung 54 zur Aufnahme der Rotorwelle ringförmig umgibt. Die Dichtfläche 52 liegt an einer Dichtung 56 an, welche die Rotorwelle 10 feststehend umgibt und den Rotorraum 28 im Inneren des Spaltrohres 14 zum Pumpenraum, in welchem das Laufrad 8 angeordnet ist, hin abdichtet. Diese Dichtung 56 wird durch Federwirkung an der Dichtfläche 52 in Anlage gehalten. Die Dichtung 56 gewährleistet, dass Verunreinigungen im Fluid, welches vom Laufrad 8 gefördert wird, nicht in den Rotorraum 28 im Inneren des Spaltrohrs 14 eindringen und dort zu unerwünschter Reibung oder Beschädigung führen können.

Die Gegenlaufscheibe 46 ist vorzugsweise ebenfalls aus Hartmetall oder aus Keramik ausgebildet. Die dem Laufrad 8 abgewandte Seite 58 ist sphärisch ausgebildet (in Fig. 1 nicht gezeigt) und in einer sphärischen Aufnahme im Pumpengehäuse gelagert, so dass sich die Gegenlaufscheibe 46 selbsttätig parallel zum Laufrad 8 ausrichten kann. Dieser Teil der Gegenlaufscheibe, welcher die Rückseite 58 bildet, kann aus einem anderen Material als Hartmetall oder Keramik ausgebildet sein und mit dem Teil der Gegenlaufscheibe 46, welcher dem Laufrad 8 zugewandt ist, beispielsweise durch Verkleben verbunden sein.

Das Laufrad 8 ist umfänglich von dem Spiralgehäuse 6 umgeben. Das Spiralgehäuse 6 erstreckt sich ausgehend vom Umfangsbereich des Laufrades 8 schraubenförmig zu dem Anschlussstutzen 2, so dass eine Strömungsumlenkung in axialer Richtung erfolgt. D. h. die Strömung, welche in radialer/tangentialer Richtung am Außenumfang des Laufrades 8 austritt, wird durch das Spiralgehäuse 6 zunächst in rein tangentialer Richtung bzw. Umfangsrichtung des Laufrades 8 umgelenkt und dann aufgrund der schraubenförmigen Windung des Spiralgehäuses 6 möglichst verlustfrei in axiale Richtung gelenkt, so dass die Strömung am Anschlussstutzen 2 in axialer Richtung aus dem Pumpenaggregat austreten kann. Das Spiralgehäuse 6 ist vorzugsweise ebenfalls als Spritzgussteil aus Kunststoff gefertigt, Das Spiralgehäuse 6 beinhaltet an seinem unteren, dem Laufrad 8 zugewandten Ende ferner die ebenfalls sphärische Aufnahme für die Gegenlaufscheibe 6 und bildet zentral den Saugmund 48 der Pumpe, durch welchen das Fluid durch Rotation des Laufrades 8 angesaugt wird. Das äußere Gehäuse des Pumpenaggregats weist in dem Bereich, in welchem in seinem Inneren das Spiralgehäuse 6 angeordnet ist, in seiner äußeren Umfangswandung Eintrittsöffnung 62 auf, durch welche das Fluid von außen eintritt, das Spiralgehäuse 6 von außen umströmt und dann in den Saugmund 48 eintritt.

Mit allen den vorangehend beschriebenen Elementen, d. h. einem Spaltrohr 14 aus Kunststoff mit Metallisierung, kleinem Durchmesser des Rotors 12 mit einem Laufrad 8 mit kleinem Durchmesser aus Hartmetall, welches gleichzeitig Abdichtung und Axiallagerung übernimmt, kann ein sehr leistungsfähiges kompaktes Tauchpumpenaggregat geschaffen werden, welches bei nur einer Stufe mit hoher Betriebsdrehzahl eine große Förderleistung erreicht.

### Bezugszeichenliste

- 2 -: Anschlussstutzen
- 4 -: Rückschlagventil
- 6 -: Spiralgehäuse
- 8 -: Laufrad
- 10 -: Rotorwelle
- 11 -: Elektromotor
- 12 -: Permanentmagnetrotor
- 14 -: Spaltrohr
- 16 -: Stator
- 18 -: Statorgehäuse
- 20 -: Radiallager
- 22 -: rohrförmiges Bauteil
- 24, 26 -: axiale Enden
- 28 -: Innenraum, Rotorraum
- 30 -: Bodenelement
- 32 -: Nut
- 34 -: Kragen
- 36 -: Innenwandung
- 38 -: Metallschicht
- 39 -: Schweißnaht
- 40 -: Axialseite
- 42 -: Laufradschaufeln
- 44 -: Stirnseiten
- 46 -: Gegenlaufscheibe
- 48 -: Saugmund
- 50 -: Rückseite des Laufrades
- 52 -: Dichtfläche
- 54 -: Öffnung
- 56 -: Dichtung

- 58 -: Rückseite der Gegenlaufscheibe
- 60 -: Pumpengehäuse
- 62 -: Eintrittsöffnungen

- X -: axiale Richtung, Rotationsachse

## Patentansprüche

1. Pumpenaggregat mit einem nasslaufenden Elektromotor (11), der ein Spaltrohr (14) aufweist, welches aus einem nicht metallischen Material (22) gefertigt ist, wobei das nicht metallische Material (22) mit zumindest einer zusätzlichen hermetisch dichtenden Schicht (38) in Form einer Metallisierung des nicht metallischen Materials (22) versehen ist.

2. Pumpenaggregat nach Anspruch 1, **dadurch gekennzeichnet, dass** die zumindest eine Schicht als Beschichtung (38) an der inneren und/oder äußeren Umfangsfläche des nicht metallischen Materials (22) ausgebildet ist.

3. Pumpenaggregat nach Anspruch 1 oder 2, **dadurch gekennzeichnet, dass** das Spaltrohr (14) aus Kunststoff und vorzugsweise einem faserverstärkten Kunststoff gefertigt ist.

4. Pumpenaggregat nach einem der vorangehenden Ansprüche, **dadurch gekennzeichnet, dass** das Spaltrohr (14) aus einem rohrförmigen Bauteil (22) und einem Bodenelement (30) gefertigt ist, welches das rohrförmige Bauteil (22) an einem ersten axialen Ende (24) verschließt.

5. Pumpenaggregat nach Anspruch 4, **dadurch gekennzeichnet, dass** das Bodenelement (30) mit dem rohrförmigen Bauteil (22) vergossen ist,

6. Pumpenaggregat nach Anspruch 4 oder 5, **dadurch gekennzeichnet, dass** das rohrförmige Bauteil (22) und das Bodenelement (30) aus einem nicht metallischen Material, vorzugsweise Kunststoff gefertigt und nach dem Zusammensetzen gemeinsam mit der zusätzlichen Schicht oder Beschichtung (38) versehen sind.

7. Pumpenaggregat nach einem der vorangehenden Ansprüche, **dadurch gekennzeichnet, dass** an einem axialen Ende (26) des Spaltrohres (14) am Außenumfang ein sich radial nach außen erstreckender, vorzugsweise metallischer Kragen (34) ausgebildet ist.

8. Pumpenaggregat nach Anspruch 7, **dadurch gekennzeichnet, dass** der Kragen (34) mit dem nicht metallischen Material form- und/oder stoffschlüssig verbunden ist und gemeinsam mit diesem mit der zusätzlichen Schicht oder Beschichtung (38) versehen ist.

9. Pumpenaggregat nach Anspruch 7 oder 8, bei welchem eine Oberfläche (36) des Kragens (34) vor der Verbindung mit dem nicht metallischen Material des Spaltrohres (14), vorzugsweise durch Laserbestrahlung, strukturiert ist.

10. Pumpenaggregat nach einem der vorangehenden Ansprüche, **dadurch gekennzeichnet dass** der Elektromotor (11) einen Permanentmagnetrotor (12) aufweist.

11. Pumpenaggregat nach einem der vorangehenden Ansprüche, **dadurch gekennzeichnet, dass** es als Tauchpumpenaggregat ausgebildet ist.

12. Pumpenaggregat noch einem der vorangehenden Ansprüche, **dadurch gekennzeichnet, dass** ein Laufrad (8) des Pumpenaggregats durch den Elektromotor (11) mit einer Maximaldrehzahl größer 20000 U/min antreibbar ist und das Laufrad (8) im Bereich des Saugmundes (48) axial abgedichtet ist.

13. Pumpenaggregat nach Anspruch 12, **dadurch gekennzeichnet, dass** das zumindest eine axiale Stirnseite (44) des Laufrades (8) eine Axiallagerfläche bildet, welche vorzugsweise gleichzeitig als axiale Dichtfläche dient.

14. Pumpenaggregat nach Anspruch 13, **dadurch gekennzeichnet, dass** das Laufrad (8) an seiner Axialseite (40), an welcher Laufradschaufeln (42) angeordnet sind, offen ausgebildet ist und die axialen Stirnseiten (44) der Laufradschaufeln (42) eine Axiallagerfläche des Laufrades (8) bilden.

15. Pumpenaggregat nach einem der vorangehenden Ansprüche, **dadurch gekennzeichnet, dass** das Laufrad (8) auf einer Rotorwelle (10) in axialer Richtung (X) fixiert ist.

16. Pumpenaggregat nach einem der vorangehenden Ansprüche, **dadurch gekennzeichnet, dass** die dem Elektromotor (11) zugewandte axiale Stirnseite (50) des Laufrades (8) als Dichtfläche zur Abdichtung des Rotorraumes (28) des Elektromotors (11) ausgebildet ist.

17. Pumpenaggregat nach einem der vorangehenden Ansprüche, **dadurch gekennzeichnet, dass** das Laufrad (8) zumindest eine Oberfläche aus Hartmetall oder Keramik aufweist und vorzugsweise vollständig aus Hartmetall oder Keramik gefertigt ist.

18. Pumpenaggregat nach einem der vorangehenden Ansprüche, **dadurch gekennzeichnet, dass** es lediglich eine Stufe aufweist.

19. Pumpenaggregat nach einem der vorangehenden Ansprüche, **dadurch gekennzeichnet, dass** eine dem Laufrad (8) zugewandte Gegenlaufscheibe (46) vorgesehen ist, welche an einer Axialseite (44) des Laufrades (8) derart anliegt, dass sie eine Axiallagerfläche (58) bildet.

20. Pumpenaggregat nach Anspruch 19 **dadurch gekennzeichnet, dass** die Gegenlaufscheibe (46) zumindest eine Oberfläche aus Hartmetall oder keramischen Material aufweist.

21. Pumpenaggregat nach Anspruch 19 oder 20, **dadurch gekennzeichnet, dass** die dem Laufrad (8) abgewandte Axialseite (58) der Gegenlaufscheibe (46) sphärisch ausgebildet ist.

22. Pumpenaggregat noch einem der vorangehenden Ansprüche, **dadurch gekennzeichnet, dass** das Laufrad (8) von einem Spiralgehäuse (6) oder einem Leitapparat umgeben ist,

23. Pumpenaggregat nach Anspruch 22, **dadurch gekennzeichnet, dass** das Laufrad (8) von einem Spiralgehäuse (6) umgeben ist, welches sich derart schraubenförmig erstreckt, dass die Austrittsöffnung des Spiralgehäuses in axialer Richtung (X) zu dem Laufrad (8) ausgerichtet ist.

## Claims

1. A pump assembly with a wet-running electric motor (11), which comprises a can (14) which is manufactured of a non-metallic material (22), wherein the non-metallic material (22) is provided with at least one additional, hermetically sealing layer (38) in the form of a metallisation of the non-metallic material (22).

2. A pump assembly according to claim 1, **characterised in that** the at least one layer is designed as a coating (38) on the inner and/or outer peripheral surface of the non-metallic material (22).

3. A pump assembly according to claim 1 or 2, **characterised in that** the can (14) is manufactured of plastic and preferably of a fibre-reinforced plastic.

4. A pump assembly according to one of the preceding claims, **characterised in that** the can (14) is manufactured of a tubular component (22) and of a base element (30), which closes the tubular component (22) at a first axial end (24).

5. A pump assembly according to claim 4, **characterised in that** the base element (30) is cast with the tubular component (22).

6. A pump assembly according to claim 4 or 5, **characterised in that** the tubular component (22) and the base element (30) are manufactured of a non-metallic material, preferably plastic, and after the assembly are together provided with the additional layer or coating (38).

7. A pump assembly according to one of the preceding claims, **characterised in that** a radially outwardly extending, preferably metallic collar (34) is formed at an axial end (26) of the can (14) on the outer periphery.

8. A pump assembly according to claim 7, **characterised in that** the collar (34) is connected to the non-metallic material with a positive fit and/or with a material fit, and together with this is provided with the additional layer or coating (38).

9. A pump assembly according to claim 7 or 8, with which a surface (36) of the collar (34) is structured, preferably by way of laser radiation, before the connection to the non-metallic material of the can (14).

10. A pump assembly according to one of the preceding claims, **characterised in that** the electric motor (11) comprises a permanent magnet rotor (12).

11. A pump assembly according to one of the preceding claims, **characterised in that** it is designed as a submersible pump assembly.

12. A pump assembly according to one of the preceding claims, **characterised in that** an impeller (8) of the pump assembly may be driven by the electric motor (11) with a maximal rotation speed of greater than 20000 rpm and the impeller (8) is axially sealed in the region of the suction port (48).

13. A pump assembly according to claim 12, **characterised in that** the at least one axial end-side (44) of the impeller (8) forms a thrust bearing surface, which preferably simultaneously serves as an axial sealing surface.

14. A pump assembly according to claim 13, **characterised in that** the impeller at its axial side (40) on which impeller blades (42) are arranged, is formed in an open manner and the axial end-sides (44) of the impeller blades (42) form a thrust bearing surface of the impeller (8).

15. A pump assembly according to one of the preceding claims, **characterised in that** the impeller (8) is fixed on a rotor shaft (10) in the axial direction (X).

16. A pump assembly according to one of the preceding claims, **characterised in that** the axial end-side (50) of the impeller (8), said end-side (50) facing the electric motor (11), is designed as a sealing surface for sealing the rotor space (28) of the electric motor (11).

17. A pump assembly according to one of the preceding claims, **characterised in that** the impeller (8) comprises at least one surface of hard metal or ceramic, and preferably is manufactured completely of hard metal or ceramic.

18. A pump assembly according to one of the preceding claims, **characterised in that** it has only one stage.

19. A pump assembly according to one of the preceding claims, **characterised in that** a counter-running disk (46) facing the impeller (8) is provided, which bears on an axial side (40) of the impeller (8) in a manner such that its forms a thrust bearing surface (58).

20. A pump assembly according to claim 19, **characterised in that** the counter-running disk (46) comprises at least one surface of hard metal or ceramic material.

21. A pump assembly according to claim 19 or 20, **characterised in that** the axial side (58) of the counter-running disk (46), which is distant to the impeller (8), is designed in a spherical manner.

22. A pump assembly according to one of the preceding claims, **characterised in that** the impeller (8) is surrounded by a spiral housing (6) or a diffuser.

23. A pump assembly according to claim 22, **characterised in that** the impeller (8) is surrounded by a spiral housing (6), which extends in a helical manner and in a manner such that the exit opening of the spiral housing is aligned in the axial direction (X) to the impeller (8).

## Revendications

1. Groupe motopompe comportant un moteur électrique de type humide (11) qui présente une gaine de moteur (14) fabriquée à partir d'un matériau non métallique (22), dans lequel le matériau non métallique (22) est muni d'au moins une couche supplémentaire (38) assurant l'étanchéité sous la forme d'une métallisation du matériau non métallique (22).

2. Groupe motopompe selon la revendication 1, **caractérisé en ce que** la couche, au moins au nombre de une, est conçue sous forme d'un revêtement (38) au niveau de la surface périphérique interne et/ou externe du matériau non métallique (22).

3. Groupe motopompe selon la revendication 1 ou 2, **caractérisé en ce que** la gaine de moteur (14) est fabriquée à partir d'une matière plastique, et de préférence d'une matière plastique renforcée à la fibre de verre.

4. Groupe motopompe selon l'une des revendications précédentes, **caractérisé en ce que** la gaine de moteur (14) est fabriquée à partir d'un composant de forme tubulaire (22) et d'un élément de fond (30) qui obture l'élément de forme tubulaire (22) au niveau d'une première extrémité axiale (24).

5. Groupe motopompe selon la revendication 4, **caractérisé en ce que** l'élément de fond (30) est coulé avec le composant de forme tubulaire (22).

6. Groupe motopompe selon la revendication 4 ou 5, **caractérisé en ce que** le composant de forme tubulaire (22) et l'élément de fond (30) sont fabriqués à partir d'un matériau non métallique, de préférence à partir de matière plastique, et après le montage sont pourvus conjointement de la couche ou du revêtement supplémentaire (38).

7. Groupe motopompe selon l'une des revendications précédentes, **caractérisé en ce qu'**au niveau d'une extrémité axiale (26) de la gaine de moteur (14) est formée au niveau de la périphérie extérieure une collerette (34), de préférence métallique, qui s'étend vers l'extérieur dans la direction radiale.

8. Groupe motopompe selon la revendication 7, **caractérisé en ce que** la collerette (34) est reliée par engagement de forme et/ou de matière au matériau non métallique et est pourvue conjointement à celui-ci de la couche ou du revêtement supplémentaire (38).

9. Groupe motopompe selon la revendication 7 ou 8, dans lequel une surface (36) de la collerette (34) est structurée avant la liaison avec le matériau non métallique de la gaine de moteur (14), de préférence par irradiation au laser.

10. Groupe motopompe selon l'une des revendications précédentes, **caractérisé en ce que** le moteur électrique (11) présente un rotor à aimant permanent (12).

11. Groupe motopompe selon l'une des revendications précédentes, **caractérisé en ce qu'**il est conçu sous forme d'un groupe motopompe à immersion.

12. Groupe motopompe selon l'une des revendications précédentes, **caractérisé en ce qu'**une roue mobile (8) du groupe motopompe peut être entraînée par le moteur électrique (11) avec une vitesse de rotation maximum supérieure à 20 000 tours/minute, et **en ce que** la roue mobile (8) est rendue étanche axialement dans la zone de l'embouchure d'aspiration (48).

13. Groupe motopompe selon la revendication 12, **caractérisé en ce qu'**au moins une face avant axiale (44) de la roue mobile (8) forme une surface de butée axiale qui sert de préférence simultanément de surface d'étanchéité axiale.

14. Groupe motopompe selon la revendication 13, **caractérisé en ce que** la roue mobile (8) est exécutée de façon ouverte au niveau de son côté axial (40) au niveau duquel sont disposées les pales de la roue mobile (42), et **en ce que** les faces avant axiales (44) des pales de la roue mobile (42) forment une surface de butée axiale de la roue mobile (8).

15. Groupe motopompe selon l'une des revendications précédentes, **caractérisé en ce que** la roue mobile (8) est fixée sur un arbre de rotor (10) dans la direction axiale (X).

16. Groupe motopompe selon l'une des revendications précédentes, **caractérisé en ce que** la face avant axiale (50) de la roue mobile (8) orientée vers le moteur électrique (11) est conçue en tant que surface étanche pour rendre étanche l'espace de rotor (28) du moteur électrique (11).

17. Groupe motopompe selon l'une des revendications précédentes, **caractérisé en ce que** la roue mobile (8) présente au moins une surface en métal dur ou en céramique et est fabriquée de préférence entièrement à partir de métal dur ou de céramique.

18. Groupe motopompe selon l'une des revendications précédentes, **caractérisé en ce qu'**il présente un seul étage.

19. Groupe motopompe selon l'une des revendications précédentes, **caractérisé en ce qu'**est prévu un disque à contre-rotation (46) orienté vers la roue mobile (8), qui repose contre un côté axial (44) de la roue mobile (8) de façon telle qu'il forme une surface de butée axiale (58).

20. Groupe motopompe selon la revendication 19, **caractérisé en ce que** le disque à contre-rotation (46) présente au moins une surface en métal dur ou en matériau céramique.

21. Groupe motopompe selon la revendication 19 ou 20, **caractérisé en ce que** le côté axial (58) du disque à contre-rotation (46) opposé à la roue mobile (8) est exécuté de façon sphérique.

22. Groupe motopompe selon l'une des revendications précédentes, **caractérisé en ce que** la roue mobile (8) est entourée par un carter en spirale (6) ou un dispositif directeur.

23. Groupe motopompe selon la revendication 22, **caractérisé en ce que** la roue mobile (8) est entourée par un carter en spirale (6) qui s'étend de façon hélicoïdale de façon telle que l'ouverture de sortie du carter en spirale est orientée dans la direction axiale (X) vers la roue mobile (8).
